(19) Europäisches Patentamt
European Patent Office
Office européen des brevets

(11) Veröffentlichungsnummer: **0 169 524**
**B1**

(12) # EUROPÄISCHE PATENTSCHRIFT

(45) Veröffentlichungstag der Patentschrift: **20.04.88**

(51) Int. Cl.[4]: **G 11 B 5/702**

(21) Anmeldenummer: **85109123.1**

(22) Anmeldetag: **22.07.85**

(54) **Magnetische Aufzeichnungsträger.**

(30) Priorität: **27.07.84 DE 3427682**

(43) Veröffentlichungstag der Anmeldung: **29.01.86 Patentblatt 86/5**

(45) Bekanntmachung des Hinweises auf die Patenterteilung: **20.04.88 Patentblatt 88/16**

(84) Benannte Vertragsstaaten: **DE FR GB NL**

(56) Entgegenhaltungen:
**EP - A - 0 099 533**
**EP - A - 0 100 017**

(73) Patentinhaber: **BASF Aktiengesellschaft, Carl-Bosch-Strasse 38, D-6700 Ludwigshafen (DE)**

(72) Erfinder: **Lehner, August, Wachenheimer Strasse 4, D-6701 Roedersheim-Gronau (DE)**
Erfinder: **Heil, Guenter, Dr., Dirmsteiner Weg 4, D-6700 Ludwigshafen (DE)**
Erfinder: **Kovacs, Jenoe, Dr., Kantstrasse 9, D-6717 Hessheim (DE)**
Erfinder: **Balz, Werner, Dr., Kropsburgstrasse 44, D-6703 Limburgerhof (DE)**
Erfinder: **Lenz, Werner, Dr., Heinrich-Baermann-Strasse 14, D-6702 Bad Duerkheim (DE)**

**EP 0 169 524 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft magnetische Aufzeichnungsträger aus einem nichtmagnetischen Trägermaterial, das mit einer Magnetschicht auf der Basis von in Bindemitteln dispergiertem, feinteiligem magnetischen Material versehen sind und die in der Magnetschicht als Bindemittel spezielle polymerisierbare, im wesentlichen lineare, thermoplastische, in organischen Lösungsmitteln lösliche Polyurethanelastomere mit Acrylesterseiten- und Acrylesterendgruppen, die vernetzt werden, enthalten.

Magnetische Aufzeichnungsträger zur Aufnahme und Wiedergabe von Ton, Bild und Daten sind bekannt. Die ständig steigenden Anforderungen, welche an diese Aufzeichnungsträger gestellt werden, machen weitere Verbesserungen in magnetischer und elektroakustischer Hinsicht nötig. So erfordert die Entwicklung in Richtung höherer Aufzeichnungsdichten bei allen genannten Anwendungsformen häufig die Herstellung dünnerer Magnetschichten. Aus diesem Grunde muss sowohl die Packungsdichte des magnetischen Materials in der Magnetschicht, die remanente Magnetisierung in Aufzeichnungsrichtung, die gleichmässige Verteilung des magnetischen Materials in der Schicht sowie die Oberflächenglätte und die Gleichmässigkeit der Schicht verbessert werden, denn die originalgetreue Speicherung von Signalen stellt hohe Anforderungen an die Qualität einer Magnetschicht. Die Frequenzanteile eines Schallereignisses an der oberen Grenze der Hörbarkeit sind für die Erkennbarkeit besonders wichtig. Eine Magnetschicht muss daher diese hohen und tieferen Frequenzen amplitudengetreu speichern und wiedergeben können.

Neben einer extrem gleichmässigen Verteilung des magnetischen Materials im organischen Bindemittel muss die Schicht in Aufzeichnungsrichtung magnetisch hochempfindlich sein. Dazu wird die Anisotropie der nadelförmigen Pigmentteilchen ausgenutzt. Die flüssige Dispersion aus Magnetpulver und organischer Bindemittellösung wird nach Beschichtung eines inerten Trägers einem Magnetfeld ausgesetzt, so dass die magnetisierbaren Nadeln in Aufzeichnungsrichtung ausgerichtet werden. Durch den darauf unmittelbar folgenden Trockenvorgang wird die Lage der Teilchen im Bindemittelfilm festgelegt.

Die Verteilung des magnetischen Pigments im organischen Bindemittel und seine Ausrichtung im magnetischen Feld wird von der Natur des verwendeten Polymeren beeinflusst. Dies tritt besonders stark bei der Verwendung feinteiliger Pigmente in Erscheinung. Die Auswahl an organischen Bindemitteln und ihren Kombinationen für Magnetpulver ist gross. Bekannt ist z.B. die Verwendung von Polyacrylaten, Polyamiden, Polyester, Polyurethanen, Phenoxyharzen, Mischpolymerisaten aus Vinylchlorid/Acrylnitril, Copolymerisaten aus Vinylchlorid, Vinylacetat und Vinylalkohol. Der grössere Teil der aufgeführten Polymeren ist relativ hart und spröde. Die übliche mechanische Beanspruchung der Magnetschicht erfordert jedoch eine elastische oftmals weichere Einstellung. Dazu werden häufig Polyurethanelastomere mit den relativ spröden Polymeren, wie Phenoxiharzen, Vinylchlorid-Vinylacetat-Copolymeren, Polycarbonat u.a. kombiniert. Zur Verbesserung der Laufeigenschaften werden die Polymermischungen häufig mit Polyisocyanaten vernetzt. Deshalb besitzen auch die mitverwendeten Hartharze häufig OH-Gruppen. Bei Verwendung solcher Bindemittelsysteme ist jedoch der hohe Lösungsmittelbedarf, die lange Dispergierdauer, die erforderliche Zweiphasendispergierung und schliesslich die Vernetzung mit Polyisocyanaten von Nachteil. Insbesondere ergeben sich durch die Polyisocyanatzugabe Verarbeitungsschwierigkeiten, da die Viskosität der Dispersion ansteigt und auch die Lagerfähigkeit der Dispersion stark begrenzt wird. Ausserdem lassen sich mit derartigen Bindemittelsystemen nur eine geringe Ausrichtung der magnetischen Teilchen in der Schicht und damit auch nur niedrige remanente Magnetisierungen und entsprechend schlechte elektroakustische Eigenschaften des Aufzeichnungsträgers erreichen.

Auf dem Lackgebiet ist es bekannt, vernetzbare Polyurethane durch den Einbau von ungesättigten Diolen wie Butendiol herzustellen. Die Reaktivität dieser Doppelbindungen ist jedoch gering, so dass die häufig erforderliche Vernetzung schwierig durchführbar ist. Weiter ist die Herstellung von Polyurethanen mit Acrylatdoppelbindungen am Ende der Polyurethankette bekannt. Dies hat jedoch den Nachteil, dass bei einem hohen Doppelbindungswert die Ketten entweder zu kurz oder die Polymere zu stark verzweigt sind. Beides würde zu mechanisch minderwertigen Aufzeichnungsträgern führen. Verwendet man Bindemittel, die nur seitenständige Acrylesterdoppelbindungen besitzen, dann werden die die doppelbindungsfreien Molekülenden nicht in das Innere des Molekülverbands eingebaut und wirken als Weichmacher. Dies führt dazu, dass zum Erreichen der erforderlichen Reisskraft und des E-Moduls sehr viele seitenständige Doppelbindungen eingebaut werden müssen, wodurch die Vernetzungsdichte ansteigen und die Werte für Dehnung und Elastizität fallen würde. Damit ergäben sich Eigenschaften die für Bindemittel für magnetische Aufzeichnungsträger unzureichend wären, was sich beispielsweise durch eine schlechte Haftung der Magnetschicht auf dem Träger zeigen würde.

Aufgabe der Erfindung war es daher, magnetische Aufzeichnungsträger bereitzustellen, welche sich durch eine Verbesserung der magnetischen Werte, wie der remanenten Magnetisierung in Aufzeichnungsrichtung sowie aller elektroakustischen Daten, wie Höhen- und Tiefenempfindlichkeit, Aussteuerbarkeit der Höhen und Tiefen und Verbesserung der Kopierdämpfung, bei vorgegebenen magnetischen Materialien unter Verwendung von speziellen Bindemitteln auszeichnen, wobei gleichzeitig die mechanischen Eigenschaften der Magnetschicht, wie Reibung, Haftung und Abriebfestigkeit den hohen Anforderungen genügen. Eine weitere Aufgabe der Erfindung war es, die Herstellung der Magnetdispersion durch Verarbeitungsvorteile wie einphasige Dispergierung, kurze Dispergierzeiten und Lösungsmitteleinsparung wirtschaftlicher zu gestalten.

Deshalb liegt der Erfindung insbesondere die Aufgabe zugrunde, bei der Herstellung der magnetischen Aufzeichnungsträger weitgehend lineare,

elastische, praktisch unvernetzte hochreaktive Harze einzusetzen, die vor ihrer Verarbeitung löslich sind und die vorgenannten Nachteile nicht aufweisen.

Es wurde nun gefunden, dass magnetische Aufzeichnungsträger aus einer auf einem nichtmagnetischen Trägermaterial aufgetragenen Magnetschicht, im wesentlichen bestehend aus einem in vernetztem Polymerbindemittel feinverteilten magnetischen Material die geforderten Eigenschaften besitzen, wenn das Polymerbindemittel ein polymerisierbares thermoplastisches, in organischen Lösungsmitteln lösliches Polyurethan mit Acrylesterseiten- und Acrylesterendgruppen mit einem K-Wert (gemessen als 2%ige Lösung in Dimethylformamid) von 20 bis 55 ist, das hergestellt wurde durch Umsetzung von Poly- und/oder Di-isocyanaten mit einem Gemisch aus

a) Methacryl- bzw. Acrylesterdiolen mit Molekulargewichten von 146 bis 3000
b) Methacryl- bzw. Acrylestermonoalkoholen mit Molekulargewichten von 116 bis 300
c) anderen von a) verschiedenen organischen Polydiolverbindungen mit Molekulargewichten zwischen 400 und 5000
sowie gegebenenfalls
d) von a) verschiedenen Diolen, Diaminen, Aminoalkoholen oder Triolen mit Molekulargewichten zwischen 61 und 400 oder Wasser

im NCO/OH-Verhältnis von 0,9:1 bis 1,1:1, mit der Massgabe, dass pro Mol der Komponente c) 1,4 bis 10 Mol Poly- und/oder Diisocyanat, gegebenenfalls bis zu 9 Mol der Komponente d) und 0,1 bis 6 Mol der Komponenten a) und b) verwendet werden, und wobei der unpigmentierte vernetzte Film des Polymerbindemittels eine Reisskraft von > 15 N/mm$^2$, Reissdehnung von > 20%, einen E-Modul von > 150 N/mm$^2$ und eine Pendelhärte von 30 bis 140 aufweist.

Im Rahmen der Ausarbeitung vorliegender Erfindung hat es sich als vorteilhaft herausgestellt, das Verhältnis der Komponenten c) und d) gemäss den Eigenschaften der einzelnen Bausteine, wie dem Molgewicht des Polyesterdiols, der Art der Kettenverlängerer, wie auch der Isocyanate auszuwählen. Das Verhältnis der Komponenten a) und b) zu den Komponenten c) und d) ergibt die Vernetzungsdichte und beträgt 0,1 bis < 1:1, bevorzugt 0,1 bis 0,6:1, besonders bevorzugt ist das Verhältnis 0,1 bis 0,5:1. Dabei ist das Verhältnis von a) zu b) in weiten Grenzen möglich, günstig ist jedoch das Verhältnis von a) zu b) von 0,05:1 bis 1:0,1, bevorzugt 0,2:1 bis 1:0,5.

Besonders vorteilhaft sind dann die Polymerbindemittel, wenn sie vor der Vernetzung bei 30°C filmbildend sind, pro 1000 g Polymer 0,1 bis 1 Acrylesterbindungen besitzen und einen K-Wert (2%ig in Dimethylformamid) von 24 bis 45, insbesondere einen K-Wert von 26 bis 40 aufweisen und der unpigmentierte mit Elektronenstrahlen vernetzte Film eine Reisskraft von > 25 N/mm$^2$, eine Reissdehnung > 50% und einen E-Modul von > 200 N/mm$^2$ aufweist und die Pendelhärte zwischen 30 und 100 s liegt.

Die Vernetzung der Polymerbindemittel lässt sich, wie in der Literatur beschrieben, radikalisch oder ionisch vornehmen. Bevorzugt ist jedoch die umweltfreundliche und sehr definierte und schnell ablaufende Elektronenstrahlhärtung.

Zur weiteren Verbesserung der Eigenschaften der erfindungsgemässen magnetischen Aufzeichnungsträger lassen sich dem Gemisch noch 6 bis 50 Gew.-% C-C-doppelbindungshaltige Mono- oder Polymere zusetzen.

Die derart gekennzeichneten polymerisierbaren thermoplastischen Polyurethanelastomeren lassen sich gegenüber den bekannten vernetzbaren synthetischen Harzen hoch polyaddieren. Die polymerisierbaren ungesättigten Gruppen bleiben während der Polyurethanherstellung und danach erhalten. Damit können mehrere polymerisierbare ungesättigte Gruppen in die weitgehend linearen Moleküle, die nur sehr wenig Acrylesterendgruppen besitzen, eingeführt werden. Auf diese Weise wird die Aushärtbarkeit des Erzeugnisses nicht durch einen hohen Polymerisationsgrad vermindert. Zusätzlich zu diesen günstigen Bedingungen hinsichtlich der Kombination des hohen Polymerisationsgrades und der guten Aushärtungseigenschaften weisen die Polymerbindemittel eine verbesserte Elastizität auf. Demgegenüber weisen die herkömmlichen quervernetzbaren Harze Nachteile vor allem hinsichtlich der Biegeeigenschaften auf, selbst dort, wo sie hinsichtlich ihrer Härte durchaus den Einsatzanforderungen genügen würden. Dieser Nachteil beruht im wesentlichen auf den geringen Molekulargewichten dieser Harze bei zu hoher Vernetzungsdichte.

Ferner sind sie vernetzten Elastomeren hinsichtlich ihrer Haftung auf Metallen und Kunststoffen, wie sie bei magnetischen Aufzeichnungsträgern eingesetzt werden sowie auch hinsichtlich ihrer Wasserbeständigkeit, Lösungsmittelfestigkeit und Temperaturbeständigkeit den unvernetzten Polyurethanharzen deutlich überlegen. Der Erweichungspunkt der zusätzlich durch Polymerisation vernetzten ungesättigten Polyurethanelastomeren im Vergleich zu ähnlichen Elastomeren des Standes der Technik ist erhöht.

Ausserdem sind durch die gekennzeichneten Polymerbindemittel die magnetischen Aufzeichnungsträger gemäss der Erfindung wesentlich verbessert hinsichtlich ihrer mechanischen Festigkeit, Haftung und ihrer chemischen Resistenz. Diese Eigenschaften sind auf das hohe Molekulargewicht, auf die Gegenwart der Urethanbindungen sowie auf die Gegenwart der noch polymerisierbaren ungesättigten Seitengruppen und Endgruppen im Molekül und die Vernetzung vorzugsweise mit Elektronenstrahlen zurückzuführen.

Durch die Verwendung dieser Polymerbindemittel lässt sich ohne Zumischen von physikalisch trocknenden Lackbindemitteln wie Phenoxyharzen, Epoxyharzen, Polyvinylchlorid, Polyurethanelastomeren u.a. und unabhängig vom magnetischen Material Dispergierdauer auf unter 30 Stunden bei einphasiger Dispergierung absenken. Für besondere Anwendungsgebiete kann die Zumischung solcher Polymeren jedoch zweckmässig sein. Ausserdem muss der magnetische Aufzeichnungsträger nur noch einmal und zwar unter geringem Druck durch

den Kalander gefahren werden, daneben können bis zu 40% des Lösungsmittels gegenüber den bisher bei hochwertigen Bändern eingesetzten Bindemittelsystemen eingespart werden.

Neben diesen Vorteilen werden die magnetischen Aufzeichnungsträger auch in den magnetischen und elektroakustischen Werten deutlich gegenüber den handelsüblichen Produkten verbessert. Es werden bei Audiobändern auf Basis von $CrO_2$ magnetische Werte erreicht, die über den Standardwerten der Sättigung (Mm) von > 190 mT, der Remanenz (Mr) > 175 mT und der Koerzitivkraft (Hc) von 39 kA/m bei einem Richtfaktor (RF) von > 3,0 (Schichtstärke 4 bis 6 µm) liegen. Bei den elektroakustischen Werten lassen sich Verbesserungen z.B. für ein $CrO_2$-Band gegenüber dem Bezugsband C 401 R in der Tiefenaussteuerbarkeit von 0,5 bis 4 dB, der Höhenaussteuerbarkeit von 0,5 bis 4 dB und der Kopierdämpfung von +2 bis +5 dB erzielen.

Vergleichbare Verbesserungen sind auch mit den anderen magnetischen Materialien wie Eisen, Eisenoxid und Cobalt-dotiertes Eisenoxid erreichbar. Die genannten Effekte wirken sich nicht nur bei Tonsondern auch bei Bild- und Datenträgern aus.

Die Magnetschicht der erfindungsgemässen magnetischen Aufzeichnungsträger wird aus dem vernetzten Polymerbindemittel mit dem darin feinverteilten magnetischen Material gebildet. Als das zu vernetzende Bindemittel wird gemäss der Erfindung ein thermoplastisches, in organischen Lösungsmitteln lösliches Polyurethan mit Acrylesterseiten- und Endgruppen eingesetzt. Zu seiner Herstellung lassen sich folgende Komponenten einsetzen:

Als Polyisocyanate eignen sich die üblichen, aus der Polyurethanchemie bekannten Verbindungen, insbesondere Diisocyanat. Es können sowohl aromatische als auch aliphatische oder heterocyclische Diisocyanate verwendet werden, beispielsweise 4,4-Diphenylmethandiisocyanat, Discyclohexylmethandiisocyanat, 1,5-Naphthylendiisocyanat, 2,4- und 2,6-Toluylendiisocyanat, Hexanmethylendiisocyanat, Isophorondiisocyanat und Trimethylhexamethylendiisocyanat und Dicyclohexylmethandiisocyanat. Besonders geeignet sind Diphenylmethandiisocyanat, Isophorondiisocyanat, Toliylendiisocyanat und Dicyclohexylmethandiisocyanat. In vielen speziellen Fällen können auch teilweise verkappte Polyisocyanate verwendet werden, welche die Bildung zusätzlich vernetzender Polyurethane ermöglichen, z.B. dimeres Toluylendiisocyanat, oder mit beispielsweise Phenol, tert.-Butanol, Phthalimid oder Caprolactam partiell umgesetzte Polyisocyanate.

Als Komponente a), d.h. Methacryl- bzw. Acrylesterdiole mit Molekulargewichten zwischen 146 und 3000 eignen sich Reaktionsprodukte von Epoxidverbindungen mit polymerisierbaren olefinisch ungesättigten Carbonsäuren, insbesondere Acryl- und Methacrylsäure, wobei jeweils etwa auf jede Epoxidgruppe eine Carboxylgruppe kommt, sowie Reaktionsprodukte von Dicarbonsäuren mit polymerisierbaren olefinisch ungesättigten Glycidylverbindungen, wie sie z.B. in der DE-OS 2164386 beschrieben sind.

Als ungesättigtes Acrylesterdiole können auch Umsetzungsprodukte aus OH-Gruppen-tragenden Monoepoxiden wie Glycidol mit (Meth)-Acrylsäure herangezogen werden. Geeignete polymerisierbare Diole (Polyole) können z.B. aus Epoxiden mit zwei endständigen Epoxidgruppen gemäss der allgemeinen Formel (vgl. auch US-PS 3373075)

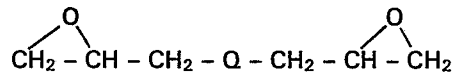

erhalten werden, in der Q ein zweibindiges Radikal bedeutet, wie z.B.

$-O-$, $-O-(\overset{R^1}{\overset{|}{C}}H-CH_2-O)_n$ mit n = 1 bis 10, wobei $R^1$ für Wasserstoff oder Methyl steht, d.h. also ein von Ethylenglykol oder Propylenglykol abgeleitetes Radikal, ein $-O-(CH_2)_m-O-$Rest mit m = 1 bis 10, vorzugsweise 1 bis 7 oder wobei dieses Radikal von Polyethylenglykol oder Polypropylenglykol herleitbar ist, oder Q für den Rest der allgemeinen Formel

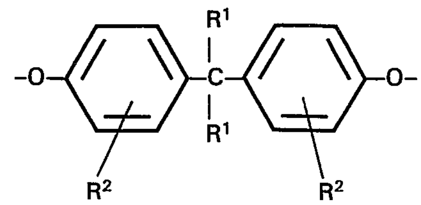

steht, wobei dieses Radikal von 4,4-Dihydroxydiphenylmethan, Bisphenol A oder kernsubstituierten Derivaten dieser Verbindungen hergeleitet werden kann. Die Umsetzungsprodukte der Epoxidverbindungen mit Acryl- und/oder Methacrylsäure sollten bei der späteren Umsetzung mit Diisocyanaten weitgehend bifunktionell in Bezug auf OH-Gruppen sein. Bei einer OH-Funktionalität 3 besteht sonst die Gefahr der Vernetzung.

Die Umsetzung zwischen den Epoxidverbindungen und den polymerisierbaren olefinisch ungesättigten Säuremonomeren ist eine ringöffnende Veresterung zwischen den Epoxidgruppen der Diepoxidverbindungen und den Carbonylgruppen der polymerisierbaren (Meth)acrylsäure, die etwa analog der DE-OS 2164386 in bekannter Weise ausgeführt werden kann (vgl. auch US-PS 3373075 und US-PS 2824851).

Die vorgenannten Epoxidverbindungen und deren Umsetzungsprodukte können allein oder im Gemisch verwendet werden. Bevorzugt eignen sich Umsetzungsprodukte aus Bisphenol A-Diglycidylether oder 2,3-Epoxpropanol-1 mit Acryl- oder Methacrylsäure.

Die für die Komponente b) geeigneten Verbindungen sind Monoester aus Acrylsäure oder Methacrylsäure und einem Diol mit einem Molekulargewicht von 116 bis 300, wie Ethylenglykolmonoacrylat, 1,2-Hydroxypropylencyclohexanmonoacrylat, 1,3--Hydroxypropylenglykolmonoacrylat, 1,4-Butandiolmonoacrylat, 1,4-Butandiolmonomethacrylat, Ethylenglykolmonomethacrylat, 1,10-Decandiolmonoacrylat. Auch Gemische solcher Hydroxylverbindungen können eingesetzt werden. Höhermolekulare Alkandiole sind mit dem Polyurethan nur teilweise verträglich und deshalb weniger geeignet.

Als Komponente c) einsetzbare Polydiole weisen Molgewichte von 400 bis 5000, bevorzugt von 700 bis 2500 auf. Hier lassen sich die üblichen Polyesterole wie Adipate auf Basis von Glykolen, Polycaprolactone oder auch Polyether, z.B. auf Basis von Polytetrahydrofuran, oder Polycarbonate einsetzen. Geeignete Polyole sind ferner Polytetrahydrofuran (MG 1000 u. MG 2000), Polypropylenglykol (MG 1000) oder Adipate mit Glykol (MG 2000), mit Diethylenglykol (MG 2000) mit Butandiol-1,4 (MG 940) mit Hexandiol-1,6 und 2,2-Dimethyl-1,3-Propandiol (MG 1000) oder Polycaprolactone (MG 830 und 2000) und Polycarbonat (MG 2000). Als Polyesterole mit einem Molekulargewicht von 400 bis 5000 kommen zweckmässigerweise überwiegend lineare Polymere mit endständigen OH-Gruppen, bevorzugt solche mit 2 OH-Endgruppen, in Frage. Die Säurezahl der Polyesterole ist kleiner als 10 und vorzugsweise kleiner als 3. Die Polyesterole lassen sich in einfacher Weise durch Veresterung von aliphatischen Dicarbonsäuren mit 4 bis 12 C-Atomen, vorzugsweise 4 bis 6 C-Atomen, mit aliphatischen Glykolen, bevorzugt mit Glykolen mit 2 bis 12 C-Atomen oder durch Polymerisation von cyclischen Lactonen mit 3 bis 6 C-Atomen erhalten. Hierfür geeignete aliphatische Dicarbonsäuren sind Glutarsäure, Pimelinsäure, Korksäure, Sebacinsäure, Sodecandisäure sowie vorzugsweise Adipinsäure und Bernsteinsäure. Die Dicarbonsäuren können einzeln oder als Gemisch verwendet werden. Zur Herstellung der Polyesterole kann es gegebenenfalls vorteilhaft sein, anstelle der Dicarbonsäuren die entsprechenden Säurederivate, wie Carbonsäureester mit 1 bis 4 Kohlenstoffatomen im Alkoholrest, Carbonsäureanhydride oder Carbonsäurechloride zu verwenden. Beispiele für Glykole zur Polyesterolherstellung sind Diethylenglykol, Pentadiol, Decandiol und 2,2,4-Trimethylpentandiol-1,5. Vorzugsweise verwendet werden Ethandiol-1,2, Butandiol-1,4, Hexandiol-1,6 und 2,2-Dimethylpropandiol-1,3.

Zur Herstellung der polymerisierbaren Polyurethane kann gegebenenfalls noch die Komponente d) zugegeben werden. Dies sind von a) verschiedene Diole, Diamine, Aminoalkohole oder Triole. Als Diole werden Verbindungen mit 2 bis 18 Kohlenstoffatomen, vorzugsweise 2 bis 6 C-Atomen eingesetzt. Als Beispiele hierfür seien genannt: Ethandiol-1,2, Propandiol-1,3, Butandiol-1,4, Hexandiol-1,6, Pentandiol-1,5, Decandiol-1,10, Methyl-1,3-propandiol, 2,2-Dimethyl-1,3-propandiol, 2,2-Dimethyl-1,4-butandiol, 2-Methyl-2-butyl-1,3-propandiol, Hydroxypivalinsäureneopentylglykolester, Diethylenglykol, Triethylenglykol, Methylendiethanolamin.

Als Triole werden Verbindungen mit 3 bis 18, vorzugsweise 3 bis 6 C-Atomen angewandt. Als Beispiele für entsprechende Triole seien Glycerin, Trimethylolpropan und Hexantriol genannt. Geeignet sind auch niedermolekulare Umsetzungsprodukte aus z.B. Glycerin oder Trimethylolpropan mit Ethylenoxid und/oder Propylenoxid.

Das Vorhandensein von geringen Mengen (< 10 Mol.-%, bezogen auf OH-Komponenten) Triolen bei der Polyaddition führt zu einer leichten Quervernetzung des Endproduktes, was sich, sofern keine örtliche Übervernetzung auftritt, positiv auf die mechanischen Eigenschaften des Polyurethans und des daraus hergestellten magnetischen Aufzeichnungsträgers auswirkt.

Aminoalkohole mit bevorzugt 2 bis 10 Kohlenstoffatomen sind z.B. Monoethanolamin, Diethanolamin, Monoisopropanolamin, Diisopropanolamin, Methylisopropanolamin, Ethylisopropanolamin, Methylethanolamin, 3-Aminopropanol, 1-Ethylaminobutanol-2, 4-Methyl-4-aminopentanol-2, N-(2-Hydroxyethyl)-anilin. Sekundäre Aminoalkohole sind besonders geeignet, denn durch ihre Anlagerung am Kettenende wird die Löslichkeit der Polymeren verbessert. Die daraus hergestellten Filme sind nach ihrer Vernetzung mechanisch hochwertig.

Diamine sind beispielsweise Ethylendiamin, 1,6-Hexamethylendiamin, 4,9-Dioxadodecan-1, 12-Diamin, 4,4'-Diaminodicyclohexylmethan, 4,4-Diaminodiphenylmethan, Aminoalkohole nach Anspruch 11 sind z.B. Monoethanolamin, Monoisopropanolamin, Methylethanolamin, 3-Aminopropanol, 1-Ethylaminobutanol-2, 4-Methyl-4-aminopentanol-2.

Bei der Wahl des Lösungsmittels ist zu beachten, dass der Herstellung der Polyurethanmasse kein Lösungsmittel verwendet wird, das unter den Reaktionsbedingungen mit Isocyanatgruppen reagierende funktionelle Gruppen besitzt. Bei der Herstellung der genannten Polymerbindemittel lässt sich jedes Lösungsmittel einsetzen, das mit der Polyurethanmasse und den Reaktionspartnern nicht in Reaktion tritt. Bevorzugte Lösungsmittel sind gegebenenfalls halogenierte Kohlenwasserstoffe, Ketone, tertiäre Alkohole, Ether, Ester oder Nitrile, wie z.B. Aceton, Methylethylketon, tert.-Butanol, Acetonitril, Ethylacetat, Methylenchlorid, Chloroform, Tetrachlorkohlenstoff, N-Methyl-Pyrrolidon, Dimethylformamid, Dimethylsulfoxid, Tetrahydrofuran oder Dioxan. Selbstverständlich können auch Mischungen derartiger Lösungsmittel verwendet werden.

Die Herstellung der Polyurethane erfolgt unter den aus der Literatur bekannten üblichen Bedingungen der Polyaddition in Lösung oder im Batch.

Da die resultierenden Polymerbindemittel im allgemeinen in Lösung verarbeitet werden, wird für die Herstellung der Polyurethane zweckmässigerweise die Lösungspolymerisation bevorzugt. Hierfür bieten sich das Ein- und Zweistufenverfahren an.

Als geeignete Katalysatoren zur Herstellung der Polyurethane und für die Vernetzungsreaktion seien beispielhaft genannt: tert.Amine, wie Triethylamin, Triethylenamin, N-Methyl-pyridin und N-Methyl-morpholin, Metallsalze, wie Kaliumacetat, und organische Metallverbindungen, wie Dibutylzinnlaurat. Die geeignete Katalysatormenge ist abhängig von der Wirksamkeit des in Frage kommenden Katalysators. Im allgemeinen hat es sich als zweckmässig erwiesen 0,005 bis 0,3 Gewichtsteile, vorzugsweise 0,01 bis 0,1 Gewichtsteile für jeweils 100 Gewichtsteile Polyurethan zu verwenden.

Beim One-Shot-Verfahren werden die Ausgangskomponenten in einem Teil des Lösungsmittels gelöst, so dass die Lösungen mit einem Feststoffgehalt von 30 bis 80 Gew.-% gebildet werden. Anschliessend werden die Lösungen unter Rühren auf Temperaturen von 20 bis 90°C, vorzugsweise von 30 bis

70°C erwärmt. Die Komponenten werden im NCO/OH-Verhältnis von < 1:1 bis zum NCO-Gehalt von Null umgesetzt, anschliessend wird auf die gewünschte Endkonzentration verdünnt. Bei geringem NCO-Überschuss werden die noch vorhandenen NCO-Gruppen mit dem üblichen Abbruchmittel, wie Monoalkohol oder Monoamine umgesetzt.

Beim 2-Stufenpolymerverfahren wird das Polyisocyanat vorgelegt, dann werden die Komponenten a), c) und gegebenenfalls d) und der Katalysator und die Hilfs- und Zusatzstoffe im Lösungsmittel bei Temperaturen von 20 bis 90°C, vorzugsweise 30 bis 70°C in 0,5 bis 5 Stunden zugegeben. Die Komponenten werden bis zum gewünschten NCO-Gehalt umgesetzt, dann wird in der 2. Stufe die Komponente b) zugesetzt. Beim 2-Stufenverfahren wird in der ersten Stufe mit einem NCO-Überschuss, gegenüber den Komponenten b), c) und d) gearbeitet. Die angegebenen Fahrweisen sollen die Herstellung des Polymeren erläutern, jedoch nicht begrenzen. Der K-Wert nach H. Fikentscher (Cellulose-Chemie 30 [1931], S. 58 ff.) geeigneter Polyurethan-Produkte liegt im Bereich von 20 bis 55.

Die weitere Verarbeitung der Lösung des acrylesterhaltigen Polyurethan-Bindemittels mit magnetischem Material und üblichen Hilfsstoffen zu magnetischen Aufzeichnungsträgern erfolgt in an sich bekannter Weise.

Als Magnetpigmente können die an sich bekannten verwendet werden. Als geeignete Magnetpigmente seien beispielhaft genannt: Gamma-Eisen(III)-oxid, feinteiliger Magnetit, ferromagnetisches undotiertes oder dotiertes Chromdioxid, kobaltdotiertes Gamma-Eisen(III)-oxid sowie ferromagnetische Metalle und Metallegierungspigmente, wie Legierungen aus Eisen und Kobalt. Bevorzugte Magnetpigmente sind nadelförmiges Gamma-Eisen(III)-oxid sowie ferromagnetisches Chromdioxid. Die Teilchengrösse beträgt im allgemeinen 0,2 bis 2 µm, bevorzugt ist der Bereich von 0,3 bis 0,8 µm.

In an sich bekannter Weise können die Magnetschichten ferner in kleinen Mengen Zusätze wie Dispergiermittel und/oder Gleitmittel, aber auch Füllstoffe enthalten, die bei der Dispergierung der magnetischen Materialien oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin sowie Fettsäureester oder Wachse, Siliconöle, Russ usw. Die Menge der Zusätze ist die an sich übliche, sie liegt im allgemeinen unter 10 Gew.-%, bezogen auf die Magnetschicht.

Die polymerisierbaren Polyurethane werden im allgemeinen als alleinige Bindemittel für die Herstellung von Magnetschichten verwendet. Sie zeichnen sich hierbei bei K-Werten bis 40 durch sehr kurze Dispergierzeiten aus.

Das Verhältnis von Magnetpigment zu Bindemittel in den erfindungsgemässen Aufzeichnungsmaterialien liegt im allgemeinen zwischen 1 und 10 und insbesondere 3 bis 6 Gew.-Teilen Magnetpigment zu einem Gewichtsteil des Bindemittels bzw. Bindemittelgemisches. Es ist ein besonderer Vorteil der erfindungsgemässen Mischung, dass aufgrund des vorzüglichen Pigmentbindevermögens der Polyurethane hohe Magnetpigmentkonzentrationen in den Magnetschichten möglich sind, ohne dass die mechanischen Eigenschaften verschlechtert werden oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200 µm und insbesondere von 6 bis 36 µm. In neuerer Zeit ist auch die Anwendung von Magnetschichten auf Papierträgern für Zwecke der mittleren Datentechnik bedeutend geworden.

Die Herstellung der erfindungsgemässen magnetischen Aufzeichnungsträger erfolgt in an sich bekannter Weise. Hierzu wird das magnetische Material in einer Lösung der elektronenstrahlhärtbaren Bindemittel in einem organischen Lösungsmittel, unter Verwendung sonstiger üblicher Hilfsmittel, in einer Dispergiereinrichtung zu einer Dispersion verarbeitet. Die Magnetdispersion wird nun mit Hilfe von Beschichtungsmaschinen wie z.B. eines Linealgiessers, einer Walzen- oder Reverse-Roll-Auftragsvorrichtung oder einer Düsenbeschichtungsmaschine, auf den nichtmagnetischen Träger aufgetragen. Als nichtmagnetische Träger lassen sich die üblichen Trägermaterialien verwenden. Auch die Verwendung von Polyimidfolien ist für spezielle Anwendungen möglich.

Bevor die noch flüssige Beschichtungsmischung auf dem Träger getrocknet wird, was zweckmässigerweise bei Temperaturen von 50 bis 100°C während 15 bis 120 Sekunden in einem konventionellen Ofen-Trockner geschieht, werden die Magnetteilchen gegebenenfalls durch Einwirkung eines Magnetfeldes entlang der vorgesehenen Aufzeichnungsrichtung orientiert. Daran kann sich gegebenenfalls eine sehr schwache Anpolymerisation der Beschichtung mit Elektronenstrahlen unter Verwendung einer Dosis von weniger als 6 kGray, vorzugsweise weniger als 2 kGray oder auch mit UV-Licht anschliessen. In letzterem Fall ist zusätzlich die Verwendung eines üblichen hochabsorbierenden Photoinitiators nötig. Danach werden die Magnetschichten auf üblichen Maschinen durch Hindurchführen zwischen geheizten und polierten Walzen, gegebenenfalls bei Anwendung von Druck und Temperaturen von 30 bis 80°C, vorzugsweise 50 bis 70°C, geglättet und verdichtet.

Hierbei genügen vorteilhafterweise mildere Bedingungen als bei herkömmlichen bandförmigen Aufzeichnungsträgern. Die Dicke der Magnetschicht beträgt nun im allgemeinen 0,5 bis 20 µm, vorzugsweise 1,5 bis 10 µm bei Bändern bzw. 0,5 bis 3 µm bei scheibenförmigen Aufzeichnungsträgern.

Die Aushärtung der magnetischen Aufzeichnungsschicht erfolgt mittels beschleunigter Elektronen. Das Verfahren hierzu ist das bei anderen Beschichtungsverfahren übliche. Es kommen Elektronenbeschleuniger mit 150 bis 300 kV Beschleunigungsspannung in Frage. Sowohl Scanner- als auch Linear- oder Planarkathodenanlagen mit Bestrahlungsleistungen von mehr als 500, vorzugsweise mehr als 1000 kGray/sec sind geeignet. Die Bestrahlungszeit bzw. Bandgeschwindigkeit wird dabei so reguliert, dass die Magnetbeschichtung mit einer Energiedosis von 15 bis 90 kGray, vorzugsweise 25 bis 60 kGray, bestrahlt wird. Der für eine optimale Auspolymerisation der Doppelbindungen nötige Dosiswert liegt am häufigsten bei etwa 30 bis 45 kGray für gleichzeitig mechanisch hochwertige Bindemittel. Bei Magnetbandanwendungen können niedrigere, bei Plattenanwendungen höhere Härtungsdosen vorteilhaft sein.

Die Erfindung sei anhand folgender Beispiele näher erläutert. Die in den Beispielen genannten Teile und Prozente beziehen sich, soweit nicht anders angegeben ist, auf das Gewicht.

*Beispiel A*

100,05 g 2,4-Toluylendiisocyanat wurden in 123,9 g Tetrahydrofuran gelöst in einem Rührkolben vorgelegt und auf 62°C aufgeheizt. Dazu wurden dann innerhalb von 2,5 Stunden unter Rühren bei 62°C eine Lösung aus 150,0 g eines Polyesters aus Adipinsäure und Butandiol-1,4 mit einem Molekulargewicht von 1000 und 32,45 g Hexandiol-1,6 in 200 g Tetrahydrofuran sowie 46,29 g eines Epikote 828-diacrylats 71,6%ig in Tetrahydrofuran zugegeben. Am Anfang und Ende der Zugabe wurde dem Ansatz jeweils ein Tropfen eines handelsüblichen Katalysators zugesetzt. Nach 3 Stunden betrug der NCO-Gehalt noch 0,97% worauf 21,6 g Butandiolmonoacrylat gelöst in 168,6 g Tetrahydrofuran zugesetzt wurden, so dass nach weiterem Rühren bei 60°C der NCO-Gehalt auf Null absank. Abschliessend wurden 0,3 g eines handelsüblichen Stabilisators zugesetzt. Die Viskosität des Endprodukts (TG: 40%) betrug 300 cP, der K-Wert lag (gemessen 2% in Dimethylformamid) bei 31.

*Beispiel B*

137,55 g Diphenylmethandiisocyanat wurden in 137,5 g Tetrahydrofuran gelöst in einem Rührkolben vorgelegt und auf 62°C aufgeheizt. Dazu wurden dann innerhalb von 2,5 Stunden unter Rühren bei 62°C eine Lösung aus 160,0 g eines Polyesters aus Adipinsäure und Butandiol-1,4 mit einem Molekulargewicht von 1000 und 21,6 g Butandiol-1,4 in 226 g Tetrahydrofuran sowie 61,7 g eines Epikote 828-diacrylats 71,6%ig in Tetrahydrofuran zugegeben. Am Anfang und Ende der Zugabe wurde dem Ansatz jeweils ein Tropfen eines handelsüblichen Katalysators zugesetzt. Nach 3 Stunden betrug der NCO-Gehalt noch 0,8% worauf 14,4 Butandiolmonoacrylat gelöst in 168,6 g Tetrahydrofuran zugesetzt wurden, so dass nach weiterem Rühren bei 60°C der NCO-Gehalt auf Null absank. Abschliessend wurden 0,3 g eines handelsüblichen Stabilisators zugesetzt. Der K-Wert des Endprodukts (TG: 50%) betrug (gemessen 2% in Dimethylformamid) 38. Das Produkt geliert bei Raumtemperatur, ist aber nicht vernetzt.

*Beispiel C*

100,05 g 2,4-Toluylendiisocyanat wurden in 100 g Tetrahydrofuran gelöst in einem Rührkolben vorgelegt und auf 62°C aufgeheizt. Dazu wurden dann innerhalb von 2,5 Stunden unter Rühren bei 62°C eine Lösung aus 200 g eines Polyesters aus Adipinsäure und Butandiol-1,4 mit einem Molekulargewicht von 1000 und 18 g Butandiol-1,4 in 260 g Tetrahydrofuran sowie 61,7 g eines Epikote 828-diacrylats 71,6%ig in Tetrahydrofuran zugegeben. Am Anfang und Ende der Zugabe wurde dem Ansatz jeweils ein Tropfen eines handelsüblichen Katalysators zugesetzt. Nach 3 Stunden betrug der NCO-Gehalt noch 1,2% worauf 21,6 g Butandiolmonoacrylat gelöst in 168,6 g Tetrahydrofuran zugesetzt wurden, so dass nach weiterem Rühren bei 60°C der NCO-Gehalt auf Null absank. Abschliessend wurden 0,3 g eines handelsüblichen Stabilisators zugesetzt. Der K-Wert des Endprodukts (TG: 50%) betrug (gemessen 2% in Dimethylformamid) 29,5.

*Beispiel 1*

450 Teile einer 40%igen Polyurethanacrylatlösung gemäss Beispiel A wurde mit 900 Teilen Chromdioxid mit einer Koerzitivfeldstärke von 39,3 kA/m und 497 Teilen Lösungsmittelgemisch Tetrahydrofuran/Dioxan = 1:1, 0,9 Teilen Siliconöl und 22,5 Teilen Zinkoleat in einer 6000 Volumenteile fassenden und mit 8000 Gewichtsteilen Stahlkugeln eines Durchmessers von 4 bis 6 mm gefüllten Kugelmühle 72 Stunden dispergiert. Die erhaltene Dispersion wurde unter Druck durch einen Filter von 5 µm Poren filtriert und auf eine 12 µm dicke Polyethylenterephthalatfolie mittels eines üblichen Linealgiessers aufgetragen.

Die beschichtete Folie wurde nach Durchlaufen eines üblichen Magnetfeldes zur Ausrichtung der magnetischen Teilchen zwischen 60 und 80°C getrocknet. Nach der Trocknung wurde die Magnetschicht der beschichteten Folie durch zweimaliges Hindurchziehen zwischen beheizten Walzen (60°C unter einem Liniendruck von 35 kg/cm) verdichtet und geglättet. Die Dicke der Magnetschicht betrug dann 4,8 µm. Die Beschichtungen wurden anschliessend mit einer Elektronenstrahldosis von 70 kGray gehärtet. Nach dem Schneiden der beschichteten Folie in 3,81 mm breite Audiobänder wurde diese magnetischen und elektroakustischen und mechanischen Prüfungen unterworfen. An der beschichteten Folie wurde die Oberflächenrauhigkeit als gemittelte Rauhtiefe $R_z$ gemäss DIN 4768, Blatt 1, bestimmt. Bei den Aufzeichnungseigenschaften wurden die elektroakustischen Werte gemäss DIN 45401, 45403 und 45512 (Blatt 12) gegen das Bezugsband T 308 S geprüft. Die Ergebnisse sind in der Tabelle angegeben.

*Beispiel 2*

Es wurde wie in Beispiel 1 beschrieben verfahren, jedoch wurden die 300 Teile der Polyurethanacrylatlösung gemäss Beispiel A gegen 240 Teile einer

solchen gemäss Beispiel B eingesetzt. Die Ergebnisse sind in der Tabelle angegeben.

*Beispiel 3*

Es wurde wie in Beispiel 1 beschrieben verfahren, jedoch wurden die 300 Teile der Polyurethanacrylatlösung gemäss Beispiel A gegen 240 Teile einer solchen gemäss Beispiel C eingesetzt. Die Ergebnisse sind in der Tabelle angegeben.

*TABELLE*

| | Beispiele 1 | 2 | 3 |
|---|---|---|---|
| $H_c$ [kA/m] | 39,3 | 39,3 | 39,3 |
| Mm [mT] | 206 | 199 | 201 |
| Mr [mT] | 181 | 175 | 179 |
| Richtfaktor | 3,4 | 3,2 | 3,2 |
| $R_z$ | 0,199 | 0,21 | 0,205 |
| $E_T$ [dB] | 1,8 | 1,7 | 1,8 |
| $E_H$ [dB] | 2,2 | 2,0 | 2,3 |
| $A_T$ [dB] | 3,7 | 3,5 | 3,4 |
| $A_H$ [dB] | 3,8 | 3,5 | 3,6 |
| $RG_A$ [dB] | 0,1 | 0,3 | 0,5 |
| Ko [dB] | 2,9 | 2,4 | 2,6 |
| Ablagerungstest vor und nach Klimalagerung | 1,8/2,5 | 1,6/2,0 | 1,9/2,4 |
| Pegelkonstanz | 100 | 100 | 100 |
| Haftfestigkeit cN | 15 | 12 | 16 |
| Quasistatische Reibung | 0,22 | 0,17 | 0,19 |

**Patentanspruch**

Magnetischer Aufzeichnungsträger aus einer auf einem nichtmagnetischen Trägermaterial aufgetragenen Magnetschicht, im wesentlichen bestehend aus einem in vernetztem Polymerbindemittel feinverteilten magnetischen Material, dadurch gekennzeichnet, dass das Polymerbindemittel ein polymerisierbares thermoplastisches, in organischen Lösungsmitteln lösliches Polyurethan mit Acrylesterseiten- und Acrylesterendgruppen mit einem K-Wert (gemessen als 2%ige Lösung in Dimethylformamid) von 20 bis 55 ist, das hergestellt wurde durch Umsetzung von Poly- und/oder Diisocyanaten mit einem Gemisch aus

a) Methacryl- bzw. Acrylesterdiolen mit Molekulargewichten von 146 bis 3000
b) Methacryl- bzw. Acrylestermonoalkoholen mit Molekulargewichten von 116 bis 300
c) anderen von a) verschiedenen organischen Polydiolverbindungen mit Molekulargewichten zwischen 400 und 5000
sowie gegebenenfalls
d) von a) verschiedenen Diolen, Diaminen, Aminoalkoholen oder Triolen mit Molekulargewichten zwischen 61 und 400 oder Wasser

im NCO/OH-Verhältnis von 0,9:1 bis 1,1:1, mit der Massgabe, dass pro Mol der Komponente c) 1,4 bis 10 Mol Poly- und/oder Diisocyanat, gegebenenfalls bis zu 9 Mol der Komponente d) und 0,1 bis 6 Mol der Komponenten a) und b) verwendet werden, und wobei der unpigmentierte vernetzte Film des Polymerbindemittels eine Reisskraft von > 15 N/mm², Reissdehnung von > 20%, einen E-Modul von > 150 N/mm² und eine Pendelhärte von 30 bis 140 aufweist.

**Claim**

A magnetic recording medium comprising a magnetic layer which is applied on a non-magnetic base and essentially consists of a magnetic material finely dispersed in a crosslinked polymer binder, wherein the latter is a polymerizable thermoplastic polyurethane which is soluble in organic solvents, possesses acrylate side and terminal groups, has a K value (measured on a 2% strength solution in dimethylformamide) of from 20 to 55 and is prepared by reacting poly- and/or diisocyanates with a mixture of

a) methacrylate- or acrylate-diols having molecular weights of from 146 to 3,000,
b) esters of methacrylic or acrylic acid with monoalcohols, having molecular weights of from 116 to 300, and
c) other organic polydiol compounds which have molecular weights of from 400 to 5,000, and differ from a) with from or without
d) diols which differ from a), diamines, aminoalcohols or triols having molecular weights of from 61 to 400, or water,

in an NCO/OH ratio of from 0.9:1 to 1.1:1, with the proviso that from 1.4 to 10 moles of poly- and/or diisocyanate, from 0.1 to 6 moles of components a) and b) and, where relevant, not more than 9 moles of component d) are used per mole of component c), and the unpigmented crosslinked film of the polymer binder has a tensile strength of > 15 N/mm², an elongation at break of > 20%, a modulus of elasticity of > 150 N/mm² and a pendulum hardness of from 30 to 140.

**Revendication**

Support d'enregistrement magnétique constitué d'une couche magnétique appliquée sur un matériau support non magnétique et essentiellement en une matière magnétique finement répartie dans un liant polymère réticulé, caractérisé par le fait que le liant polymère est un polyuréthanne soluble dans un solvant organique, thermoplastique, polymérisable à groupes latéraux acrylester et terminaux acrylester, d'un indice K (mesuré comme solution à 2% dans du diméthylformamide) de 20 à 55 et qui a été préparé par réaction de poly- et/ou di-isocyanates avec un mélange de

a) méthacryl- ou acrylesterdiols de poids moléculaire de 146 à 3000

b) Méthacryl- ou acrylester mono-alcools de poids moléculaire de 116 à 300

c) autres composés de polydiols organiques différents de a) de poids moléculaire compris entre 400 et 5000 ainsi qu'éventuellement

d) des diols, diamines, aminoalcools ou triols différents de a) de poids moléculaire compris entre 61 et 400 ou de l'eau

en rapport NCO/OH de 0,9/1 à 1,1/1, sous réserve que soient utilisés, par mole du composant c), 1,4 à 10 moles de poly- et/ou diisocyanate, éventuellement jusqu'à 9 moles du composant d) et 0,1 à 6 moles des composants a) et b), et le film du liant polymère réticulé, non pigmenté, possédant une résistance à la déchirure de plus de 15 $N/mm^2$, un allongement à la déchirure de plus de 20%, un module E de plus de 150 $N/mm^2$ et une dureté au pendule de 30 à 140.